# EUROPÄISCHE PATENTSCHRIFT

(11) **EP 0 694 775 B1**
(45) Veröffentlichungstag und Bekanntmachung des Hinweises auf die Patenterteilung: **31.03.1999**
(21) Anmeldenummer: 95106734.7
(22) Anmeldetag: 04.05.1995
(51) Int. Cl.: G01M 1/38, G01M 1/32

(54) **Vorrichtung und Verfahren zum Ausgleich einer Unwucht an einem Kraftfahrzeugrad**
Device and method for compensating an unbalance of a vehicle wheel
Dispositif et méthode pour compenser un déséquilibre à une roue de véhicule

(30) Priorität: 26.07.1994 DE 4426482
(43) Veröffentlichungstag der Anmeldung: 31.01.1996
(73) Patentinhaber: HOFMANN WERKSTATT-TECHNIK GMBH, D-64319 Pfungstadt (DE)
(72) Erfinder: Rothamel, Karl, D-64342 Seeheim-Jugendheim (DE); Lenhardt, Lorenz, D-64347 Griesheim (DE); Kühn, Gottfried, D-64331 Weiterstadt (DE)
(74) Vertreter: Nöth, Heinz, Dipl.-Phys.

(56) Entgegenhaltungen:
- EP-A- 0 468 369
- EP-A- 0 586 856
- EP-A- 0 642 007
- WO-A-90/03561
- DE-A- 4 122 844
- DE-A- 4 229 865
- US-A- 4 267 730

## Beschreibung

Die Erfindung betrifft eine Vorrichtung nach dem jeweiligen Oberbegriff des Patentanspruches 1 und ein Verfahren nach dem Oberbegriff des Patentanspruches 17.

Es ist bekannt (DE-AS 2,001,972 oder Hofmann-Betriebsanleitung Radauswuchtmaschine Geodyna 88/88m, Impr. 9412145-09.86), Abmessungen, insbesondere im Felgenbereich des Kraftahrzeugrades, mit Hilfe einer Abtasteinrichtung zu ermitteln und in einer Meßelektronikk abzuspeichern. Hierdurch werden der Meßelektronik entsprechende Informationen geliefert für die Berechnung der Größen und Winkellagen der Ausgleichsgewichte, die in den entsprechenden Ausgleichsebenen am Scheibenrad des Kraftfahrzeugrades anzubringen sind.

Aus der DE 41 22 844 A1 ist eine Auswuchtmaschine für Kraftfahrzeugräder bekannt, die eine Tasteinrichtung enthält, deren Tasthebel oder Taststange sowohl schwenkbar als auch längsverstellbar ist. Mit dieser Tasteinrichtung ist eine Erfassung der Felgenabmessungen bzw. Scheibenradabmessungen in den Ausgleichsebenen für die Eingabe dieser Abmessungen in die Meßelektronik vor Durchführung des Unwuchtmeßvorganges möglich.

Weiterhin sind aus der DE 42 29 865 A1 oder der EP 0 586 856 eine Vorrichtung mit den Merkmalen des jeweiligen Oberbegriffs des Patentanspruches 1 und ein Verfahren gemäß dem Oberbegriff des Patentanspruches 17 bekannt. Hierzu ist eine Tasteinrichtung zum Abtasten von Positionen an einem Kraftfahrzeugrad mit einer Positionserkennungseinrichtung verbunden. Hierdurch können mögliche Ausgleichspositionen am Kraftfahrzeugrad bezüglich Ausgleichsradius und axialem Abstand von Meßstellen einer Meßanordnung erfaßt und in einen Speicher eingegeben werden. Die Meßanordnung ist zur Bestimmung der Ausgleichsposition und der Größe des Ausgleichsgewichts am Kraftfahrzeugrad mit einer Auswerteelektronik verbunden. Ferner ist ein Vergleicher vorgesehen, der mit dem Speicher und der Positionserkennungseinrichtung verbunden ist. Zum Auffinden der von der Auswerteelektronik ermittelten Ausgleichsposition ist eine Blockiereinrichtung für die Tasteinrichtung vorgesehen, welche gesteuert durch die Auswerteelektronik die Tasteinrichtung zumindest teilweise blockiert. Die Blockiereinrichtung kann hierzu eine Klemmschraube aufweisen, welche mit einem Führungsstab in klemmenden Eingriff gebracht werden kann, so daß der Längsauszug der Tasteinrichtung, welche an den Führungsstab geführt wird, blockiert werden kann.

Aufgabe der Erfindung ist es, eine Vorrichtung und ein Verfahren der eingangs genannten Art zu schaffen, bei denen das Anbringen von Ausgleichsgewichten am Kraftfahrzeugrad in den durch die Meßelektronik ermittelten Ausgleichspositionen erleichtert wird.

Diese Aufgabe wird erfindungsgemäß bei der Vorrichtung durch die kennzeichnenden Merkmale des Patentanspruches 1 und beim Verfahren durch die kennzeichnenden Merkmale des Patentanspruches 17 gelöst. Vorteilhafte Ausgestaltungen der Erfindung sind in den jeweiligen abhängigen Ansprüchen angegeben.

Die Blockiereinrichtung erleichtert das Wiederauffinden der Ausgleichsposition zum Anbringen eines Ausgleichsgewichtes, indem sie es der Bedienperson gestattet, ohne sorgfältige Beobachtung einer Anzeige, die die Annäherung der Tasteinrichtung an die Ausgleichsposition darstellt, die korrekte Position aufzufinden. Dazu ist lediglich die Tasteinrichtung in Richtung auf die gespeicherte Ausgleichsebene zu bewegen. Bei einer auszieh- und schwenkbaren Tasteinrichtung ist während dem Ausziehen kein bestimmter Schwenkwinkel einzuhalten, vielmehr wird unabhängig von diesem die der Ausgleichsposition entsprechende Längeneinstellung der Tasteinrichtung durch die Blockiereinrichtung begrenzt, wobei die Spitze der Tasteinrichtung über die Ausgleichsebene hinaus geführt werden kann. Danach wird duch Einschwenken der Tasteinrichtung an die Felge die Ausgleichsposition zum Einsetzen des Gewichtes erreicht. Somit ist eine Blockierung oder teilweise Fixierung, und zwar die Fixierung des Längenauszugs, zur Nutzung des Vorteils der Erfindung ausreichend. Während des Einschwenkens ist eine unabsichtliche Längenänderung der Tasteinrichtung durch die erfindungsgemäße Blockiereinrichtung ausgeschlossen.

Die Blockiereinrichtung kann die Tasteinrichtung auch derart blockieren, daß die Spitze der Tasteinrichtung bei beliebigem Schwenkwinkel nur bis zur Ausgleichsebene bewegt werden kann. Bei einer weiteren Bewegung der Tasteinrichtung in Richtung auf die Ausgleichsposition gibt die Blockiereinrichtung die Tasteinrichtung mit zunehmendem Schwenkwinkel in dem Maße frei, daß die Tastspitze auf der Ausgleichsebene bezüglich der Felge radial nach außen geführt werden kann.

Die Blockiereinrichtung kann jedoch auch auf ein blockier- oder fixierbares Element einwirken, das mit der Tasteinrichtung verbunden ist. Das fixierbare Element kann durch eine Führung an eine beliebige Blockier- oder Fixierposition geführt werden, so daß ein konstruktiv einfacher Aufbau erzielt werden kann, insbesondere wenn es biegsam ist und auf eine Rolle aufwickelbar ist, wo es platzsparend untergebracht werden kann. Dabei ist es vorteilhaft, die Rolle unter Vorspannung zu halten, so daß ein Spiel oder ein Durchbiegen eines als Zugdraht, Zugseil oder Zugband ausgebildeten fixierbaren Elements ausgeglichen wird und die Reproduzierbarkeit der Einstellung bzw. Festlegung oder Blockierung der Taststange gewährleistet ist.

Die Erfindung wird nachfolgend anhand eines Ausführungsbeispiels unter Bezugnahme auf Zeichnungen näher erläutert. Es zeigt:
- Fig. 1:: in Vorderansicht in schematischer, teils gebrochener Darstellung die Anordnung der erfindungsgemäßen Vorrichtung an einer Tasteinrichtung einer Auswuchtmaschine, von der zur Veranschaulichung nur die Hauptwelle mit einer Radaufspannvorrichtung und einem auszuwuchtenden Kraftfahrzeugrad dargestellt ist;
- Fig. 2:: in Draufsicht die erfindungsgemäße Vorrichtung mit der Blockiereinrichtung; und
- Figur 3:: ein Blockschaltbild einer schematisch dargestellten Tasteinrichtung mit angeschlossener Auswerteeinrichtung.

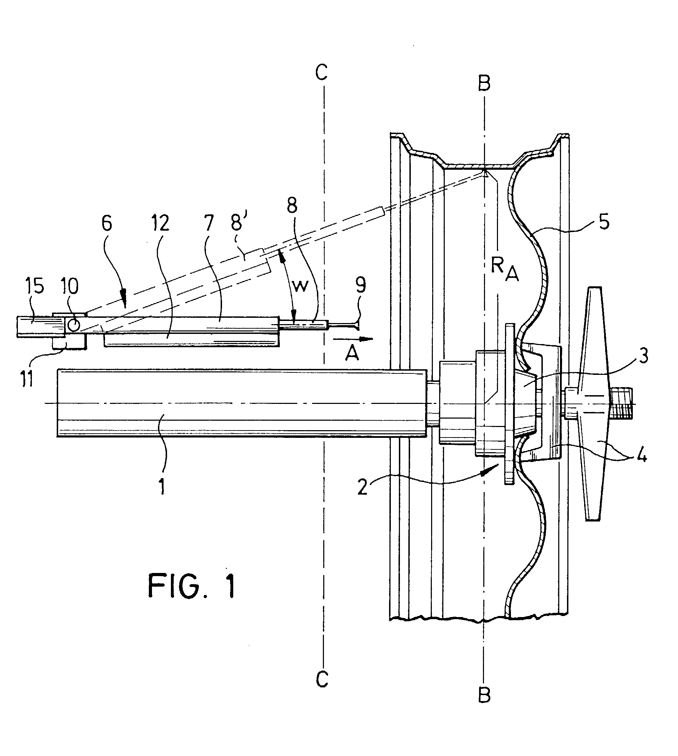

Fig. 1 zeigt eine Hauptwelle 1 einer Auswuchtmaschine mit zugehöriger Radaufspann- und Zentriervorrichtung, bestehend aus drehfest mit der Hauptwelle 1 verbundenem Spannflansch 2, Konus 3 und Spannelementen 4 zum Aufspannen einer Felge 5 eines auszuwuchtenden Kraftfahrzeugrades.

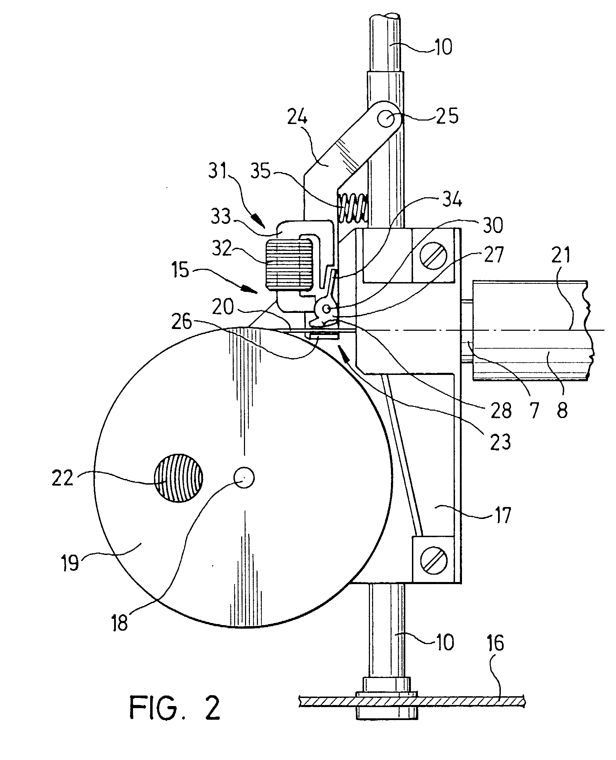

Eine Tasteinrichtung 6 besitzt eine in Abtast-Ausgangsstellung parallel zur Hauptwelle 1 ausgerichtete Führungsstange 7 mit einer an ihr axial verschiebbar gelagerten, ausziehbaren Taststange 8 mit in Pfeilrichtung A ausziehbarer Tastspitze 9, wobei die Taststange 8 teleskopartig aus mehreren Elementen bestehen kann. Die Führungsstange 7 kann rohrförmig sein und die Taststange 8 umgeben (siehe Fig. 1) oder sie kann innerhalb der Taststange 8 angeordnet sein (siehe Fig. 2). Die Taststange 8 ist mit ihrem einen Ende um eine ortsfest zur Hauptwelle 1 angeordnete Schwenkachse 10 um einen von der Position der Tastspitze 9 abhängigen Winkel w in eine strichliert angedeutete, beispielhafte Stellung 8' schwenkbar. Der Schwenkwinkel w wird mit Hilfe einer Positionserkennungseinrichtung in Form einer Winkelmeßeinrichtung 11 gemessen. Die Tastspitze 9 enthält einen (in Fig. 1 nicht dargestellten) Gewichthalter für ein Ausgleichsgewicht, insbesondere ein Klebegewicht.

Ein in der Fig. 1 nicht dargestellter Längsschlitz in der lediglich strichliert angedeuteten Gehäusewand C-C der Auswuchtmaschine kann dabei bewirken, daß die Taststange 8 zusätzlich zu ihrer Lagerung, die lediglich eine Schwenkung in einer Ebene senkrecht zur Schwenkachse 10 zuläßt, stets nur in einer mit der Längsmittelachse der Hauptwelle 1 gemeinsamen, im Ausführungsbeispiel senkrechten Ebene schwenkbar ist. Durch diese Vorsorgemaßnahme wird eine Beschädigung der Schwenklagerung der Taststange 8 vermieden. Der Abstand zwischen der Taststange 8 in Abtast-Ausgangsstellung bzw. Ruhestellung und der Längsmittelachse der Hauptwelle 1 ist so gewählt, daß die Tastspitze 9 auch den bezüglich der Felge 5 kleinstmöglichen Ausgleichsradius anfahren kann.

Wie aus Fig. 1 erkennbar ist, ermöglicht die derart beschaffene Tasteinrichtung 6 das mühelose Hinführen der Tastspitze 9 zu beliebigen Stellen des Scheibenrades bzw. der Felge 5 und damit z.B. die Erfassung einer Ausgleichsebene B-B samt Ausgleichsradius R_{A}. Der jeweilige Auszug A der Tastspitze 9 wird mit einer z.B. ein Linearpotentiometer enthaltenden Längenmeßeinrichtung 12, die beispielsweise wie in der DE-AS 20 01 972 gezeigt ausgebildet ist, gemessen. Der Schwenkwinkel w wird mit der z.B. ein Drehpotentiometer und gegebenenfalls zusätzliche Getriebe aufweisenden Winkelmeßeinrichtung 11 gemessen.

Die von der Winkelmeßeinrichtung 11 gelieferten Ausgangssignale für die ermittelten Schwenkwinkel, welche proportional zu den Ausgleichsradien sind, sowie die Ausgangssignale der Längenmeßeinrichtung 12 für die axiale Verschiebung der Taststange 8 werden einer ersten Rechnereinrichtung zugeführt, in der nach bekannten geometrischen Algorithmen der Ebenenabstand der Ausgleichsebene B-B von der maschinenfesten Bezugsebene C-C und der der jeweiligen Ausgleichsebene zugeordnete Ausgleichsradius R_{A} berechnet werden. Bei diesen Algorithmen handelt es sich um einfache geometrische Beziehungen, die ohne weiteres aus den durch die Gestaltung der Auswuchtmaschine konstruktiv vorgegebenen geometrischen Abmessungen herleitbar sind.

Einer zweiten an die erste Rechnereinrichtung angeschlossenen Rechnereinrichtung werden Daten bezüglich der Breite des auszuwuchtenden Rades zugeführt. Die Breite kann beispielsweise in bekannter Weise mit Hilfe eines Felgenbreitentasters ermittelt werden und manuell oder automatisch in die zweite Rechnereinrichtung eingegeben werden.

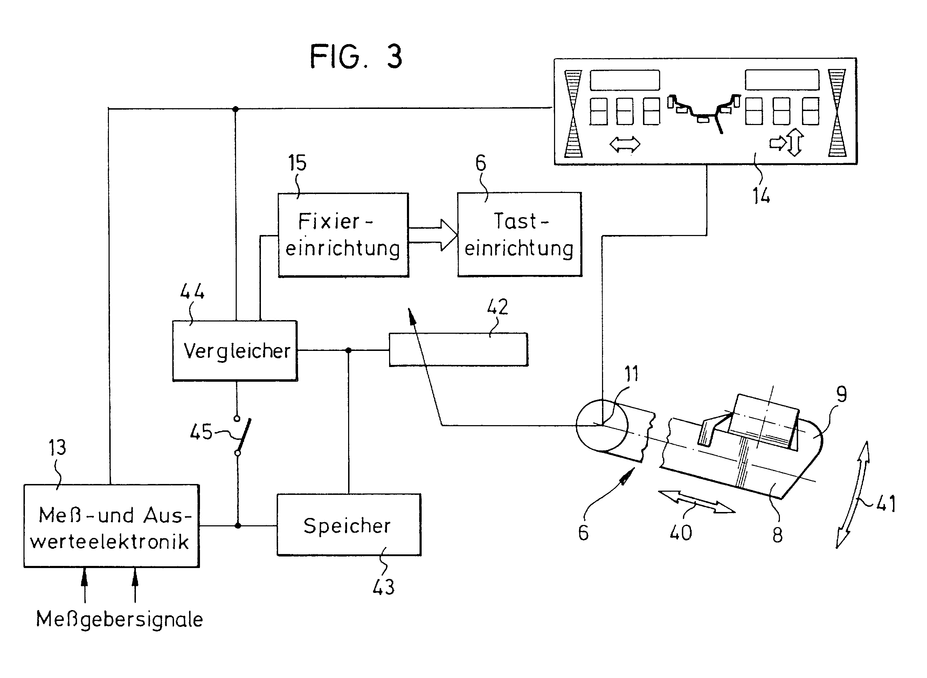

Die so ermittelten Daten bezüglich Ebenenabstand, Ausgleichsradius und Felgenbreite werden an eine Auswerteelektronik 13 (siehe Fig. 3), die gegebenenfalls mit einer Anzeigeeinrichtung 14 ausgestattet sein kann, weitergeleitet. In dieser Auswertelektronik 13 werden diese Daten bei der Unwuchtmessung mit den von den Meßwertgebern in bekannter Weise gelieferten Meßwerten verknüpft und die Ausgleichsgewichte und Ausgleichswinkellagen am auszuwuchtenden Kraftfahrzeugrad bzw. an der Felge 5 bestimmt.

In Fig. 2 ist eine Blockiereinrichtung 15 dargestellt, die im Bereich der Schwenkachse 10 der Tasteinrichtung 6 angeordnet ist. Die Schwenkachse 10 ist in einer ausschnittsweise gezeigten Maschinenvorderwand 16 gelagert. An der Schwenkachse 10 ist ein Führungsstangenhalter 17 beispielsweise mittels einer Schraubklemmung befestigt. Der Führungsstangenhalter 17 weist einen Lagerzapfen 18 auf, an dem eine Seilrolle 19 drehbar angebracht, auf der ein Seil 20 aufgewickelt ist, das mit der ausziehbaren Taststange 8 verbunden ist. Die Seilrolle 19 ist derart positioniert, daß ihr Wickelumfang im Bereich der Längsachse 21 der Führungsstange 7 bzw. der Taststange 8 liegt. Dann wird das in der Führungsstange 7 geführte Seil 20 ohne wesentliche Umlenkung auf der Seilrolle 19 aufgewickelt. In oder an der Seilrolle 19 ist eine Spiralfeder 22 angebracht, die die Seilrolle 19 gegen die Auszugsrichtung der Taststange 8 vorspannt (in Fig. 2 im Gegenuhrzeigersinn), so daß das Seil 20 sowohl in eingeschobener Ruhestellung als auch in ausgezogener Stellung der Taststange 8 unter Zugspannung straff gehalten wird.

Des weiteren enthält die Blockiereinrichtung 15 eine Klemmeinrichtung 23, die auf das Seil 20 in der Nähe der Seilrolle 19 wirken und dieses festlegen kann. Die Klemmeinrichtung 23 enthält einen Tragarm 24, der an der Schwenkachse 10 mit einem Lagerzapfen 25 drehbar befestigt ist, so daß er in einer das Seil 20 enthaltenden Ebene schwenkbar ist. Der Tragarm 24 weist an seinem freien Ende eine Druckplatte 26 und einen Klemmhebel 27 auf. Die Druckplatte 26 ist in etwa parallel zum Seil 20 angeordnet und bildet mit einer Klemmfläche 28 des Klemmhebels 27 einen Spalt, durch den das Seil 20 geführt ist, wobei es an der Druckplatte 26 anliegen kann oder nur geringfügig davon entfernt vorbeiläuft. Der Klemmhebel 27 ist an einem Lagerzapfen 30 schwenkbar gelagert und durch eine Feder (nicht dargestellt) in eine Lösestellung gedrückt, in der das Seil 20 durch den Spalt frei beweglich ist. Am Tragarm 24 ist ein Elektromagnet 31 zum Betätigen des Klemmhebels 27 angebracht. Der Elektromagnet 31 enthält eine Elektromagnetspule 32, die bei Erregung durch einen Steuerstrom einen Weicheisenkern 33 magnetisiert. Die dadurch erzeugte Magnetkraft wirkt auf einen Arm 34 des Klemmhebels 27 und dreht den Klemmhebel 27 gegen die Federkraft in eine Klemmstellung, wobei die als Kurve mit zunehmendem Radius ausgebildete Klemmfläche 28 das Seil 20 gegen die Druckplatte 26 drückt und es dabei fixiert. Die als Kurve ausgebildete Klemmfläche wirkt in Auszugsrichtung des Seiles 20 selbsthemmend. Der Tragarm 24 ist mittels einer Feder 35 mit hoher Federsteifigkeit an der Schwenkachse 10 abgestützt, so daß nur eine geringe Schwenkbewegung des Tragarmes 24 zugelassen ist. Wenn die Taststange 8 ausgezogen wird und somit das Seil 20 von der Seilrolle 19 abgewickelt wird, kann daher nach dem Aktivieren des Elektromagneten 31 und dem Festklemmen des Seiles 20 durch den Klemmhebel 27 die Taststange 8 noch um einen geringen, von der Kraft der Feder 35 abhängigen Schwenkweg des Tragarmes 24 bewegt werden. Dadurch wird ein weiches Anfahren einer Klemmstellung der Taststange 8 ermöglicht.

Gemäß einer weiteren Ausführungsform ist der Tragarm 24 fest an dem Führungsstangenhalter 17 angeordnet oder die Klemmeinrichtung 23 ist direkt auf dem Führungsstangenhalter 17 angebracht. Wenn das dargestellte weiche Anfahren einer Ausgleichsposition gewünscht ist, kann das Seil 20 elastisch, beispielsweise über eine Feder an der Taststange 8 befestigt sein. Die Feder bewirkt wie im obigen Fall, daß beim Auslösen der Klemmeinrichtung 23 der Auszug der Taststange 8 nicht ruckartig abgebremst wird, sondern ein kurzer, immer gleich langer Weg mit ansteigender Zugkraft zurückgelegt wird. So hat die Bedienperson das Gefühl, die Taststange 8 gegen einen weichen Anschlag geführt zu haben. Gleichzeitig werden dadurch beim Festklemmen die Kräfte am Seil 20 begrenzt.

Die dargestellte Tasteinrichtung 6 kann nicht nur im Abtastmodus zum Abtasten eines Scheibenrads, insbesondere im Felgenbereich, verwendet werden, sondern sie dient zusammen mit der beschriebenen Blockiereinrichtung 15 bzw. der Klemmeinrichtung 23 in einem Wiederauffindemodus außerdem zur Erleichterung der positionsgerechten Anordnung von Ausgleichsgewichten am Scheibenrad bzw. der Felge 5 nach Durchführung des Unwuchtmeßvorgangs.

Zur Erläuterung der Auslösung oder Aktivierung der Klemmeinrichtung 23 im Wiederauffindemodus wird auf Fig. 3 Bezug genommen, in der schematisch die beschriebene Tasteinrichtung 6 mit der ausziehbaren (Doppelpfeil 40) und schwenkbaren (Doppelpfeil 41) Taststange 8 dargestellt ist. Zur Positionserkennung ist die Taststange 8, wie oben erläutert, mit einer Positionserkennungseinrichtung 42 verbunden, die elektrische Positionserkennungssignale erzeugt, die proportional der jeweiligen Auszugslänge (Doppelpfeil 40) und der Schwenklage (Doppelpfeil 41) der Taststange 8, somit proportional ihrer Positionierung sind. In der DE 41 22 844 A1 ist eine verwendbare Tasteinrichtung mit Positionserkennung detailliert beschrieben. Die Positionserkennungseinrichtung 42 kann ein Potentiometer 11 zur Erkennung der Schwenkwinkellage (Doppelpfeil 41) und ein Linearpotentiometer 12 zur Erkennung der Auszuglänge (Doppelpfeil 40) der Taststange 8 aufweisen.

Die von den Potentiometern erzeugten Analogsignale können nach Digitalisierung gespeichert werden. Hierzu ist an die Positionserkennungseinrichtung 42 ein Speicher 43 angeschlossen. Dieser Speicher 43 ist Bestandteil der Meßbzw. Auswerteelektronik 13 (z.B. aus Hofmann-news 5, Impressum 09.85D bekannt), in der Meßgebersignale, welche beim Unwuchtmeßvorgang in den Meßläufen erhalten werden, ausgewertet werden. Die ausgewerteten Meßgebersignale können dann in Form von Größen- und Winkelangaben für die am Kraftfahrzeugrad einzusetzenden Ausgleichsgewichte von der Anzeigeeinrichtung 14 angezeigt werden. Sowohl an den Speicher 43 als auch an die Positionserkennungseinrichtung 42 ist ein Vergleicher 44 angeschlossen, der mit der Blockiereinrichtung 15 und gegebenenfalls mit der Anzeigeeinrichtung 14 verbunden ist.

Zum Einschalten der Betriebsart des Wiederauffindens der jeweiligen Ausgleichsebene und -position beim Ausgleichsvorgang kann ein Schalter 45 manuell oder automatisch durch ein Ablaufprogramm oder auch durch eine bestimmte Steuerbewegung der Taststange 8 betätigt werden. Beim Heranführen der Taststange 8 in die zuvor ermittelte und abgespeicherte Ausgleichsposition vergleicht der Vergleicher 44 die von der Positionserkennungseinrichtung 42 bereitgestellten Positionsdaten mit den gespeicherten Ziel- bzw. Ausgleichspositionsdaten. Wird die Taststange 8 auf die der Ausgleichsposition entsprechende Länge ausgezogen, so erkennt dies der Vergleicher 44 und er gibt ein Blockiersignal an die Blockiereinrichtung 15 bzw. die Klemmeinrichtung 23 zum Festlegen der Tasteinrichtung 6 bzw. der Taststange 8 in ihrer Längsrichtung. Die Ausgleichsposition wird dann durch Schwenken der Taststange 8 an die Felge 5 erreicht, die zuvor auf den korrekten Ausgleichswinkel (z. B. in die 12-Uhr-Stellung unter Zuhilfenahme der Anzeige 14 oder eines akustischen Signals oder unter Verwendung eines gesteuerten Antriebs) eingedreht worden ist. Die Felge 5 kann jedoch auch während der Antastbewegung der Tasteinrichtung oder nach Erreichen der Ausgleichsebene in die Winkellage gedreht werden. Wenn ein Gewichtehalter an der Tastspitze 11 angebracht ist, kann ein Ausgleichsgewicht an der Felge 5 plaziert werden kann.

An der Seilrolle 19 kann ein Drehpotentiometer als Teil der Positionserkennungseinrichtung 42 angebracht sein, das den Längenauszug des Seiles 20 bzw. der Taststange 8 erfaßt. In diesem Fall kann auf die Linearmeßeinrichtung 12 an der Taststange 8 verzichtet werden.

Statt des Seiles 20 kann auch ein biegbares Metall- oder Kunststoffband als blockier- oder fixierbares Element vorgesehen sein, das in Längsrichtung drucksteif ist.

Dann ist keine Feder zum Vorspannen der Aufwickelrolle 19 erforderlich.

## Patentansprüche

1. Vorrichtung zum Ausgleich der Unwucht eines Kraftfahrzeugrades durch mindestens ein Ausgleichsgewicht mit einer Tasteinrichtung (6) zum Abtasten von vorgegebenen Positionen an einem Kraftfahrzeugrad, einer mit der Tasteinrichtung (6) verbundenen Positionserkennungseinrichtung (42), einem mit der Positionserkennungseinrichtung (42) verbundenen Speicher (43), in welchem Positionsdaten, die mögliche Ausgleichspositionen am Kraftfahrzeugrad bestimmen, speicherbar sind, einer mit einer Meßanordnung für die Unwucht und dem Speicher verbundenen Auswerteelektronik (13) zur Bestimmung der Ausgleichsposition und der Größe des am Kraftfahrzeugrad zu befestigenden Ausgleichsgewichts, einem Vergleicher (44), der mit dem Speicher (43) und der Positionserkennungseinrichtung (42) verbunden ist, einer Blockiereinrichtung (15) für die Tasteinrichtung (6), die in einem Wiederauffindemodus beim Erreichen einer für eine gespeicherte Ausgleichsposition charakteristischen Stellung der Tasteinrichtung (6) die Tasteinrichtung (6), zumindest teilweise blockiert, und einem durch die Blockiereinrichtung (15) blockierbaren Element (20), das mit der Tasteinrichtung (6) verbunden ist und bei einer Verschiebung der Tasteinrichtung (6) mitbewegt wird,
dadurch **gekennzeichnet,**
daß die Blockiereinrichtung (15) vom Vergleicher (44) ein Blockiersignal empfängt und daß das blockierbare Element (20) ein Zugdraht, ein Zugseil oder ein Zugband ist.

2. Vorrichtung nach Anspruch 1, dadurch gekennzeichnet, daß das blockierbare Element (20) auf einer Rolle (19) aufgewickelt ist.

3. Vorrichtung nach Anspruch 2, dadurch gekennzeichnet, daß die Rolle (19) durch Federkraft gegen die Abwickelrichtung unter Vorspannung gehalten wird.

4. Vorrichtung nach Anspruch 1, dadurch gekennzeichnet, daß das Blockiersignal einen Elektromagneten (31) zum Festlegen des blockierbaren Elementes (20) betätigt.

5. Vorrichtung nach einem der Ansprüche 1 bis 4, dadurch gekennzeichnet, daß eine Druckplatte (26) vorgesehen ist, an der die Blockiereinrichtung (15) das blockierbare Element (20) festlegt.

6. Vorrichtung nach einem der Ansprüche 1 bis 5, dadurch gekennzeichnet, daß ein Klemmhebel (27) zum Festklemmen des blockierbaren Elementes (20) vorgesehen ist, auf den der Elektromagnet (31) wirkt.

7. Vorrichtung nach Anspruch 6, dadurch gekennzeichnet, daß der Klemmhebel (27) in Auszugsrichtung des blockierbaren Elementes (20) selbsthemmend ausgebildet ist.

8. Vorrichtung nach einem der Ansprüche 1 bis 7, dadurch gekennzeichnet, daß das blockierbare Element (20) elastisch an der Tasteinrichtung (6) befestigt ist.

9. Vorrichtung nach einem der Ansprüche 1 bis 8, dadurch gekennzeichnet, daß das blockierbare Element (20) über eine Feder an der Tasteinrichtung (6) befestigt ist.

10. Vorrichtung nach einem der Ansprüche 1 bis 9, dadurch gekennzeichnet, daß das blockierbare Element (20) mit einer Positionserkennungseinrichtung (42) gekoppelt ist.

11. Vorrichtung nach einem der Ansprüche 4 bis 10, dadurch gekennzeichnet, daß der Elektromagnet (31), der Klemmhebel (27) und die Druckplatte (26) der Blokkiereinrichtung (15) an einem schwenkbaren, über eine Feder (35) abgestützten Träger (24) angebracht sind.

12. Vorrichtung nach einem der Ansprüche 1 bis 11, dadurch gekennzeichnet, daß die Tasteinrichtung (6) mit dem blockierbaren Element (20) und die Blockiereinrichtung (15) um eine Schwenkachse (10) schwenkbar sind.

13. Vorrichtung nach Anspruch 12, dadurch gekennzeichnet, daß die Schwenkachse (10) horizontal und senkrecht zu einer Drehachse eines auszuwuchtenden Kraftfahrzeugrades ist.

14. Vorrichtung nach einem der Ansprüche 1 bis 13, dadurch gekennzeichnet, daß die Tasteinrichtung (6) einen Gewichtehalter aufweist.

15. Vorrichtung nach einem der Ansprüche 1 bis 14, dadurch gekennzeichnet, daß die Tasteinrichtung (6) eine axial ausziehbare Taststange (8) und eine schwenkbare Führungsstange (7) für die Taststange (8) enthält.

16. Vorrichtung nach einem der Ansprüche 1 bis 15, dadurch gekennzeichnet, daß eine Anzeigeeinrichtung (14) vorgesehen ist, die ein Signal von der Positionserkennungseinrichtung (42) zur Darstellung der Stellung der Tasteinrichtung (6) empfängt.

17. Verfahren zum Ausgleich der Unwucht eines Kraftfahrzeugrades durch mindestens ein Ausgleichsgewicht, bei dem zur Bestimmung der Ausgleichsposition und der Größe des am Kraftfahrzeugrad anzubringenden Ausgleichsgewichtes aufgrund der bei einem Unwuchtmeßvorgang erhaltenen Meßwerte der jeweilige Radius und die jeweilige Ausgleichsebene für die Ausgleichsposition am Kraftfahrzeugrad mit Hilfe einer durch eine Schwenk- und Auszugsbewegung bewegbaren Tasteinrichtung abgetastet und gespeichert werden und von einer Auswerteelektronik aus den Meßwerten und den gespeicherten Werten für den Radius und die Ausgleichsebene die Ausgleichsposition und Größe des am Kraftfahrzeugrad zu befestigenden jeweiligen Ausgleichsgewichts ermittelt und gespeichert werden,
dadurch **gekennzeichnet,**
daß beim Auffinden der gespeicherten Ausgleichsposition zuerst das Kraftfahrzeugrad in die Ausgleichswinkellage gedreht wird und anschließend die Tasteinrichtung durch die Schwenk- und Auszugsbewegung bis in eine für die gespeicherte Ausgleichsposition charakteristische Stellung bewegt wird, in der der Längenauszug eines als Zugdraht, Zugseil oder Zugband ausgebildeten und mit der Tasteinrichtung verbundenen und mitbewegten blockierbaren Elements durch eine von einem Vergleicher gesteuerte Blockiereinrichtung zumindest teilweise blockiert wird, wobei der Vergleicher beim Heranführen der Tasteinrichtung an die von der Auswerteelektronik ermittelte und gespeicherte Ausgleichsposition die dabei gelieferten Positionsdaten für die Schwenk- und Auszugsbewegung mit den Ausgleichspositionsdaten vergleicht.

18. Verfahren nach Anspruch 17, dadurch gekennzeichnet, daß die charakteristische Stellung die gespeicherte Ausgleichsposition ist.

19. Verfahren nach Anspruch 17, dadurch gekennzeichnet, daß die Tasteinrichtung in Ruhestellung blockiert wird, bis das Kraftfahrzeugrad in die Ausgleichswinkellage gedreht worden ist.

20. Verfahren nach Anspruch 17, dadurch gekennzeichnet, daß das Kraftfahrzeugrad automatisch in die Ausgleichswinkellage gedreht und dort angehalten wird.

## Claims

1. Apparatus for compensating for the unbalance of a motor vehicle wheel by at least one balancing weight, comprising a sensing device (6) for sensing predetermined positions on a motor vehicle wheel, a position detecting device (42) connected to the sensing device (6), a storage means (43) which is connected to the position detecting device (42) and in which position data which determine possible balancing positions on the motor vehicle wheel can be stored, an electronic evaluation means (13) connected to a measuring arrangement for measuring the unbalance and the storage means, for determining the balancing position and the magnitude of the balancing weight to be fixed to the motor vehicle wheel, a comparator (44) which is connected to the storage means (43) and the position detecting device (42), a blocking device (15) for the sensing device (6), which in a retrieval mode upon the attainment of a position of the sensing device (6) which is characteristic of a stored balancing positions at least partially blocks the sensing device (6), and an element (20) which can be blocked by the blocking device (15) and which is connected to the sensing device (6) and which is also moved upon displacement of the sensing device (6),
characterised in that
the blocking device (15) receives a blocking signal from the comparator (44) and the blockable element (20) is a pull wire, a pull cable or a pull strip.

2. Apparatus according to claim 1 characterised in that the blockable element (20) is wound on a roll (19).

3. Apparatus according to claim 2 characterised in that the roll (19) is held in a prestressed condition in opposition to the unwinding direction by spring force.

4. Apparatus according to claim 1 characterised in that the blocking signal actuates a solenoid (31) for fixing the blockable element (20).

5. Apparatus according to one of claims 1 to 4 characterised in that there is provided a pressure plate (26) against which the blocking device (15) fixes the blockable element (20).

6. Apparatus according to one of claims 1 to 5 characterised in that there is provided a clamping lever (27) for clamping fast the blockable element (20), on which the solenoid (31) acts.

7. Apparatus according to claim 6 characterised in that the clamping lever (27) is adapted to be self-locking in the direction of extension of the blockable element (20).

8. Apparatus according to one of claims 1 to 7 characterised in that the blockable element (20) is elastically fixed to the sensing device (6).

9. Apparatus according to one of claims 1 to 8 characterised in that the blockable element (20) is fixed to the sensing device (6) by way of a spring.

10. Apparatus according to one of claims 1 to 9 characterised in that the blockable element (20) is coupled to a position detecting device (42).

11. Apparatus according to one of claims 4 to 10 characterised in that the solenoid (31), the clamping lever (27) and the pressure plate (26) of the blocking device (15) are mounted on a pivotable carrier (24) supported by way of a spring (35).

12. Apparatus according to one of claims 1 to 11 characterised in that the sensing device (6) with the blockable element (20) and the blocking device (15) are pivotable about a pivot axis (10).

13. Apparatus according to claim 12 characterised in that the pivot axis (10) is horizontal and is perpendicular to an axis of rotation of a motor vehicle wheel to be balanced.

14. Apparatus according to one of claims 1 to 13 characterised in that the sensing device (6) has a weight holder.

15. Apparatus according to one of claims 1 to 14 characterised in that the sensing device (6) includes an axially extensible sensing bar (8) and a pivotable guide bar (7) for the sensing bar (8).

16. Apparatus according to one of claims 1 to 15 characterised in that there is provided a display device (14) which receives a signal from the position detecting device (42) for representing the position of the sensing device (6).

17. A method of compensating for unbalance of a motor vehicle wheel by at least one balancing weight, wherein to determine the balancing position and the magnitude of the balancing weight to be fitted to the motor vehicle wheel, on the basis of the measurement values obtained in an unbalance measuring procedure, the respective radius and the respective balancing plane for the balancing position on the motor vehicle wheel are sensed by means of a sensing device movable by a pivotal and extension movement, and stored, and the balancing position and the magnitude of the respective balancing weight to be fixed to the motor vehicle wheel are determined by an electronic evaluation means from the measurement values and the stored values for the radius and the balancing plane and stored,
characterised in that
upon retrieval of the stored balancing position firstly the motor vehicle wheel is turned into the angular balancing position and then the sensing device is moved by the pivotal and extension movement into a position which is characteristic for the stored balancing position and in which the lengthwise extension of a blockable element which is in the form of a pull wire, pull cable or pull strip and which is connected to and moved with the sensing device is at least partially blocked by a blocking device controlled by a comparator, wherein when the sensing device moves to the balancing position which is ascertained and stored by the electronic evaluation means. the comparator compares the position data supplied in that case for the pivotal and extension movement to the balancing position data.

18. A method according to claim 17 characterised in that the characteristic position is the stored balancing position.

19. A method according to claim 17 characterised in that the sensing device is blocked in a rest position until the motor vehicle wheel has been turned into the angular balancing position.

20. A method according to claim 17 characterised in that the motor vehicle wheel is automatically turned into and stopped in the angular balancing position.

## Revendications

1. Dispositif de compensation du balourd d'une roue de véhicule automobile, par au moins une masselotte d'équilibrage, le dispositif comportant un dispositif de palpage (6) pour l'exploration de positions prédéfinies sur une roue de véhicule automobile, un dispositif de reconnaissance de position (42) relié au dispositif de palpage (6), une mémoire (43) qui est reliée au dispositif de reconnaissance de position (42) et dans laquelle peuvent être mémorisées des données de position, qui déterminent les positions d'équilibrage possibles sur la roue du véhicule automobile, une unité électronique de traitement (13) reliée à un agencement de mesure du balourd et à la mémoire et servant à déterminer la position d'équilibrage et la dimension de masselotte d'équilibrage à fixer à la roue du véhicule automobile, un comparateur (44) qui est relié à la mémoire (43) et au dispositif de reconnaissance de position (42), un dispositif de blocage (15) du dispositif de palpage (6) qui, dans un mode de repositionnement, lorsqu'est atteinte une position du dispositif de palpage (6), caractéristique pour la position d'équilibrage mémorisée, bloque au moins en partie le dispositif de palpage (6), et un élément (20) qui est susceptible d'être bloqué par le dispositif de blocage (15), qui est relié au dispositif de palpage (6) et qui, lors d'un déplacement du dispositif de palpage (6), est déplacé en même temps que celui-ci,
caractérisé par le fait que
le dispositif de blocage (15) reçoit un signal de blocage provenant du comparateur (44) et que l'élément (20) susceptible d'être bloqué est un fil métallique de traction, un câble de traction ou une bande de traction.

2. Dispositif selon la revendication 1, caractérisé par le fait que l'élément (20) susceptible d'être bloqué est enroulé sur un rouleau (19).

3. Dispositif selon la revendication 2, caractérisé par le fait que le rouleau (19) est maintenu sous prétension, par la force d'un ressort, de manière antagoniste au sens du dévidage.

4. Dispositif selon la revendication 1, caractérisé par le fait que le signal de blocage actionne un électroaimant (31) servant à immobiliser l'élément (20) susceptible d'être bloqué.

5. Dispositif selon l'une des revendications 1 à 4, caractérisé par le fait qu'il est prévu une plaque de pression (26), contre laquelle le dispositif de blocage (15) immobilise l'élément (20) susceptible d'être bloqué.

6. Dispositif selon l'une des revendications 1 à 5, caractérisé par le fait qu'il est prévu un levier de serrage (27), sur lequel agit l'électro-aimant (31), afin de serrer et d'immobiliser l'élément (20) susceptible d'être bloqué.

7. Dispositif selon la revendication 6, caractérisé par le fait que le levier de serrage (27) est réalisé de manière autobloquante dans le sens de sortie de l'élément (20) susceptible d'être bloqué.

8. Dispositif selon l'une des revendications 1 à 7, caractérisé par le fait que l'élément (20) susceptible d'être bloqué est fixé de façon élastique sur le dispositif de palpage (6).

9. Dispositif selon l'une des revendications 1 à 8, caractérisé par le fait que l'élément (20) susceptible d'être bloqué est fixé, par l'intermédiaire d'un ressort, au dispositif de palpage (6).

10. Dispositif selon l'une des revendications 1 à 9, caractérisé par le fait que l'élément (20) susceptible d'être bloqué est couplé à un dispositif de reconnaissance de position (42).

11. Dispositif selon l'une des revendications 4 à 10, caractérisé par le fait que l'électro-aimant (31), le levier de serrage (27) et la plaque de pression (26) du dispositif de blocage (15) sont montés sur un support (24) susceptible de pivoter et soutenu par l'intermédiaire d'un ressort (35).

12. Dispositif selon l'une des revendications 1 à 11, caractérisé par le fait que le dispositif de palpage (6), avec l'élément (20) susceptible d'être bloqué, et le dispositif de blocage (15) peuvent pivoter autour d'un axe de pivotement (10).

13. Dispositif selon la revendication 12, caractérisé par le fait que l'axe de pivotement (10) est horizontal et perpendiculaire à un axe de rotation d'une roue de véhicule automobile à équilibrer.

14. Dispositif selon l'une des revendications 1 à 13, caractérisé par le fait que le dispositif de palpage (6) comporte un porte-masselotte.

15. Dispositif selon l'une des revendications 1 à 14, caractérisé par le fait que le dispositif de palpage (6) comporte une tige de palpage (8) axialement coulissante et une tige pivotante de guidage (7) de la tige de palpage (8).

16. Dispositif selon l'une des revendications 1 à 15, caractérisé par le fait qu'il est prévu un dispositif d'affichage (14), qui reçoit un signal provenant du dispositif de reconnaissance de position (42), afin d'indiquer la position du dispositif de palpage (6).

17. Procédé de compensation du balourd d'une roue de véhicule automobile par au moins une masselotte d'équilibrage, dans lequel, pour déterminer la position d'équilibrage et la dimension de masselotte d'équilibrage à mettre en place sur la roue du véhicule automobile, sur la base des valeurs de mesure obtenues lors d'un processus de mesure du balourd, le rayon correspondant et le plan d'équilibrage correspondant à la position d'équilibrage sur la roue du véhicule automobile sont détectés à l'aide d'un dispositif de palpage, susceptible d'être déplacé selon un mouvement de pivotement et de sortie, et sont mémorisés, et dans lequel la position d'équilibrage et la dimension de masselotte d'équilibrage correspondant, à fixer sur la roue du véhicule automobile, sont déterminés par une unité électronique de traitement, à partir des valeurs de mesure et des valeurs en mémoire concernant le rayon et le plan d'équilibrage, et sont mis en mémoire,
caractérisé par le fait que,
lors de la détection de la position d'équilibrage mémorisée, la roue du véhicule automobile est tout d'abord tournée pour prendre la position angulaire d'équilibrage et ensuite le dispositif de palpage est déplacé, par le mouvement de pivotement et de sortie, jusque dans une position caractéristique pour la position d'équilibrage mémorisée, la sortie en longueur d'un élément, susceptible d'être bloqué, réalisé sous la forme d'un fil métallique de traction, d'un câble de traction ou d'une bande de traction, et relié au dispositif de palpage et entraîné en même temps que celui-ci, étant alors bloquée au moins en partie par un dispositif de blocage commandé par un comparateur, le comparateur procédant, lorsque le dispositif de palpage s'approche de la position d'équilibrage déterminée par l'unité électronique de traitement et mémorisée, à la comparaison des données de position, fournies pour le mouvement de pivotement et de sortie, aux données de position d'équilibrage.

18. Procédé selon la revendication 17, caractérisé par le fait que la position caractéristique est la position d'équilibrage conservée en mémoire.

19. Procédé selon la revendication 17, caractérisé par le fait que le dispositif de palpage est bloqué en position de repos jusqu'à ce que la roue du véhicule automobile ait été tournée pour prendre la position angulaire d'équilibrage.

20. Procédé selon la revendication 17, caractérisé par le fait que la roue du véhicule automobile est tournée automatiquement jusque dans la position angulaire d'équilibrage et y est maintenue.
